Europäisches Patentamt

European Patent Office

Office européen des brevets

(19)

(11) Numéro de publication : **0 446 542 B1**

(12) ## FASCICULE DE BREVET EUROPEEN

(45) Date de publication du fascicule du brevet :
**06.10.93 Bulletin 93/40**

(51) Int. Cl.⁵ : **C02F 3/28, C02F 3/10**

(21) Numéro de dépôt : **90403338.8**

(22) Date de dépôt : **26.11.90**

(54) Composition d'activateur biologique pour fosse septique.

(30) Priorité : **13.03.90 US 492713**

(43) Date de publication de la demande :
**18.09.91 Bulletin 91/38**

(45) Mention de la délivrance du brevet :
**06.10.93 Bulletin 93/40**

(84) Etats contractants désignés :
**AT BE CH DE DK ES FR GB GR IT LI LU NL SE**

(56) Documents cités :
**EP-A- 0 248 709**
**EP-A- 0 349 441**

(56) Documents cités :
**PATENT ABSTRACTS OF JAPAN vol. 12, no. 191 (C-501)(3038) 3 juin 1988, & JP-A-62 294496 (TOYO SODA MFG CO LTD) 21 décembre 1987, PATENT ABSTRACTS OF JAPAN vol. 2, no. 76 (C-15) 16 juin 1978, & JP-A-51 107931 (TOYO SODA KOGYO K.K.) 30 mars 1978,**

(73) Titulaire : **EPARCO**
**78, rue de Provence**
**F-75009 Paris (FR)**

(72) Inventeur : **Philip, Hervé**
**2, Rue Del Lengadoc**
**F-34570 Pignan (FR)**

(74) Mandataire : **Derambure, Christian et al**
**Cabinet Bouju Derambure (Bugnion) S.A. 55, rue Boissonade**
**F-75014 Paris (FR)**

## Description

L'invention concerne une composition d'activateur biologique pour fosse septique.

On connait déjà (FR-A-2 537 490) un activateur biologique pour fosse septique qui se présente sous la forme d'un produit non corrosif, non toxique, finement divisé, de surface spécifique importante, constituant un support pour la flore microbienne anaérobie facultative, permettant d'augmenter la densité de saturation bactérienne dans la fosse septique pour une quantité équivalente de nutriments, se présentant, en solution, d'une part sous une forme colloïdale en suspension et, d'autre part, sous une phase floculante. Une autre composition d'activateur biologique est donnée par le document FR-A-2 599 356.

La présente invention a pour objectif de perfectionner l'activateur biologique du type de celui de l'état de la technique.

A cet effet et selon l'invention il est proposé un activateur biologique pour fosse septique qui selon un premier aspect comprend un mélange de :

(a) de l'ordre de 87,5 % en poids de particules de kaolinite ayant :

(i) une surface spécifique comprise entre environ 29 m$^2$/g et 35 m$^2$/g ;

(ii) une capacité d'échange cationique comprise entre environ 12 meq/100 g et 16 meq/100g ;

(iii) au moins 91 % de particules de taille inférieure à environ 16 microns ;

(iv) une densité à l'eau comprise entre environ 2,4 et 3 ;

(v) un potentiel redox négatif compris entre environ - 350 mV et - 600 mV :

et comprenant :

(vi) de l'ordre de 2 % de Fe$_2$O$_3$ ;

(vii) de l'ordre de 2000 mg/k de cuivre ;

(viii) de l'ordre de 4 500 mg/kg de zinc ;

et

(b) de l'ordre de 12,5 % en poids essentiellement de particules microporeuses d'au moins une zéolite.

Cet activateur, selon un deuxième aspect, comprend un mélange de :

(a) de l'ordre de 87,5 % en poids des particules de kaolinite ;

et

(b) de l'ordre de 12,5 % en poids essentiellement de particules microporeuses d'au moins une zéolite ayant :

(i) une surface spécifique d'environ 250 m$^2$/g ;

(ii) une capacité d'échange cationique d'environ 170 meq/100 g ;

(iii) au moins 95 % de particules ayant une taille inférieure à environ 180 microns ;

(iv) une densité à l'eau d'environ 2,2 ;

(v) un pH d'environ 8,87 ;

(vi) un potentiel redox positif ;

et comprenant

(vii) environ 46,5 % de SiO$_2$ ;

(viii) environ 15 % de Al$_2$O$_3$ ;

(ix) environ 10 % de CaO.

Cet activateur, selon un troisième aspect comprend un mélange de :

(a) de l'ordre de 80 % à 95 % en poids de particules de kaolinite, ayant :

(i) une surface spécifique comprise entre environ 29 m$^2$/g et 35 m$^2$/g ;

(ii) une capacité d'échange cationique comprise entre environ 12 meq/100g et 16 meq/100g ;

(iii) au moins 91 % de particules de taille inférieure à environ 16 microns ;

(iv) une densité à l'eau comprise entre environ 2,4 et 3 ;

(v) un potentiel redox négatif compris entre environ - 350 MV et - 600 MV ;

et

(b) de l'ordre de 5 % à 20 % en poids essentiellement de particules microporeuses d'au moins une zéolite ayant :

(i) une surface spécifique d'environ 250 m2/g ;

(ii) une capacité d'échange cationique d'environ 170 meq/100g ;

(iii) au moins 95 % de particules ayant une taille inférieure à environ 180 microns ;

(iv) une densité à l'eau d'environ 2,2 ;

(v) un pH d'environ 8,8 ;

(vi) un potentiel redox positif ;

Les autres caractéristiques de l'invention résulteront de la description qui suivra d'une forme de réalisation possible mais non limitative d'un activateur biologique perfectionné conforme à l'invention.

L'invention concerne un activateur biologique perfectionné pour fosse septique du type constitué par un produit en particules solides, non corrosif, non toxique, finement divisé, de surface spécifique importante, présentant en solution essentiellement une phase colloïdale en suspension et une phase floculante, ayant pour fonction de constituer un support pour la flore microbienne anaérobie d'une fosse septique en vue d'augmenter la densité de saturation bactérienne dans la fosse septique pour une quantité équivalente de nutriments.

Le phénomène d'activation biologique est en soi bien connu et ne fait pas directement l'objet de l'invention.

L'invention concerne un tel activateur et sa composition (tous les pourcentages de composition indiqués dans ce texte sont en poids).

L'activateur comprend un mélange de l'ordre de 80 % à 95 % et plus spécialement 87,5 % de particules de kaolinite et de l'ordre de 5 % à 20 % et plus spécialement 12,5 % de particules microporeuses d'au moins une zéolite.

La kaolinite considérée a les propriétés physico-chimiques suivantes :
- Une surface spécifique comprise entre environ 29m$^2$/g et 35m$^2$/g, et plus spécialement de l'ordre de 32m$^2$/g ;
- Une capacité d'échange cationique comprise entre environ 12 meq/100g et 16 meq/100g, et plus spécialement de l'ordre de 14 meq/100g ;
- Au moins 91 % de particules de taille inférieure à environ 16 microns, et au moins 70 % de taille inférieure à 4 microns ;
- Une densité à l'eau comprise entre environ 2,4 et 3, et plus spécialement de l'ordre de 2,7 ;
- Un potentiel redox négatif compris entre environ - 350 mV et - 600 mV et plus spécialement de l'ordre de - 500 mV ;
- un pH de l'ordre de 7,05 ;
- un pourcentage de matières volatiles de l'ordre de 7,8 % ;
- 58,5 % environ de $SiO_2$ ;
- 23,8 % environ de $Al_2O_3$ ;
- 2 % environ de $Fe_2O_3$ ;
- 0,27 % environ de CaO ;
- 0,12 % environ de MgO ;
- 0,16 % environ de $Na_2O$ ;
- 5,51 % environ de $T_iO_2$ ;
- 0,05 % environ de $K_2O$ ;
- 0,1 % environ de $P_2O5$ ;
- 0,45 % environ de zinc ;
- 0,2 % environ de cuivre ;
- des traces de cobalt, béryllium, manganèse.

La zéolite considérée est une zéolite naturelle, à savoir chabazite, phillipsite et plus spécialement ces deux zéolites naturelles en quantités sensiblement égales.

La (ou les) zéolite(s) considérée(s) a les propriétés physico-chimiques suivantes :
- Une surface spécifique d'environ 250m$^2$/g ;
- Une capacité d'échange cationique d'environ 170 meq/100g ;
- Au moins 95 % de particules ayant une taille inférieure à environ 180 microns, et 20 % inférieure à 45 microns ;
- Une densité dans l'eau d'environ 2,2 ;
- Un pH d'environ 8,87 ;
- Un potentiel redox positif ;
- Un pourcentage de matières volatiles de l'ordre de 15 % ;
- 46,5 % environ de $SiO_2$ ;
- 15 % environ de $Al_2O_3$ ;
- 3 % environ de $Fe_2O_3$ ;
- 10 % environ de CaO ;
- 2,3 % environ de MgO ;
- 0,6 % environ de $Na_2O$ ;
- 0,5 % environ de $TiO_2$ ;
- 6 % environ de $K_2O$ ;
- 0,1 % environ de $P_2O_5$ ;

L'activateur selon l'invention a - en général et plus spécialement dans la réalisation considérée où il comprend environ 87,5 % de kaolinite et environ 12,5 % de zéolite ou équivalent - les propriétés physico-chimiques suivantes :

3

- Une surface spécifique comprise entre environ 35 m²/g et 66 m²/g plus spécialement d'environ 59,3 m²/g ;
- Une capacité d'échange cationique comprise entre environ 14 meq/100g et 38 meq/100g, plus spécialement d'environ 33,5 meq/100g ;
- Au moins 80 % de particules de taille inférieure à environ 16 microns, et plus spécialement au moins 61 % inférieure à 4 microns;
- Une densité à l'eau comprise entre environ 2,25 et 2,75 et plus spécialement d'environ 2,6 ;
- Un potentiel redox négatif de l'ordre de ou inférieur à -350 mV ;
- Un encombrement compris entre 1,5 et 2,6 l/kg , plus spécialement d'environ 2,5 l/kg ;
- Un taux de matières volatiles compris entre 6,5 % et 9,5 %, notament entre 7,2 % et 9,2 % et plus spéciaement environ 8,7 % ;
- Un pH d'environ 7,85 ;
- 43 % à 94 % et plus spécialement environ 57 % de silice en $SiO_2$ ;
- 3 % à 30 % et plus spécialement environ 22,7 % d'aluminium en $Al_2\text{-}O_3$ ;
- 1,8 % à 7,7 % en poids de fer en $Fe_2O_3$ ;
- 1,3 % à 5,9 % et plus spécialement environ 1,5 % de calcium en CaO ;
- de l'ordre d'environ 0,4 % de magnésium en MgO ;
- De l'ordre d'environ 0,22 % de sodium en Na 20 ;
- De l'ordre d'environ 4,9 % de titane en $TiO_2$ ;
- De l'ordre d'environ 0,8 % de potassium en $K_2O$ ;
- De l'ordre d'environ 0,1 % de $P_2O_5$ phosphate
- De l'ordre d'environ 0,45 % de zinc ;
- De l'ordre d'environ 0,20 % de cuivre ;
- Du cobalt, beryllium, manganèse à l'état de traces.

D'excellents resultats ont été obtenus en utilisant un mélange de zéolites naturelles vendu dans le commerce sous la marque ZEOPORT B180. De telles zéolites ont une porosité élevée, une capacité d'échange cationique élevée, une capacité d'absorber certaines molécules gazeuse. Mais de telles zéolites, en soi, n'ont pas de pouvoir activateur susceptible d'être mis en oeuvre dans une fosse septique.

Selon l'invention, il y a des effets surprenants dans la combinaison de kaolinite et de zéolite, ou équivalent, dans les conditions exposées.

Plusieurs tests concernant d'une part la méthanisation d'acétate et d'autre part le volume de cellulose ont été conduits à cet effet.

Le protocole général utilisé a été le suivant :

Plusieurs bouteilles (ou récipients équivalents) de 120 ml chacune ont été préparées pour contenir chacune :
- 50 ml d'un milieu permettant le développement de bactéries anaérobies et comprenant des éléments minéraux, des oligo-éléments, des vitamines ;
- 1 ml d'une solution réductrice ;
- 0,5 ml de boues extraites d'une fosse septique ;
- un substrat carboné tel qu'acétate ou cellulose ;

Les bouteilles sont scellées hermétiquement sous une atmosphère contenant 85 % d'azote et 15 % de gaz carbonique. Puis elles sont mises en situation d'incubation à 20°C + 1°C.

Toutes les bouteilles sont suivies dans le temps en parallèle, pour les bouteilles de référence ne contenant aucun activateur et celles contenants des produits ou composition testées comme activateur. A chaque mesure faite les bouteilles sont sacrifiées.

Un tel protocole opératoire a été developpé par plusieurs auteurs. Il reproduit de façon proche le fonctionnement d'une fosse septique.

Il a été utilisé pour les tests , quatre séries de bouteilles contenant, comme produits en composition à tester :

(a) la kaolinite seule

(b) un mélange de 90 % environ de kaolinite et 10 % environ de zéolite ;

(c) la zéolite seule.

La quatrième série de bouteille, soit (d) est celle de référence, sans activateur.

La kaolinite de la série (a), le mélange de la série (b) et la zéolite de la série (c) se trouvent dans la proportion de 4g/l.

On a mesuré tout d'abord :

(i) la demande chimique en oxygène (COD)

(ii) la production de méthane.

4

EP 0 446 542 B1

Cela montrant la conversion de l'acétate en gaz méthane. Dans ce premier test le subtract utilisé est dans la proportion de 2g/l.

On a mesuré en premier lieu la durée (en jour) qui est nécessaire pour avoir la COD inférieure à 500 mg $O_2/l$. Cette durée est appelée "Fin des réactions". Les résultats sont les suivants :

(a) = 70 jours
(b) = 53 jours
(c) = plus de 70 jours
(d) = plus de 70 jours

On a mesuré en second lieu la durée qui est nécessaire pour que commence le processus biologique (ou "temps de latence"). Les résultats sont les suivants :

(a) = moins de 35 jours
(b) = moins de 35 jours
(c) = entre 53 et 59 jours
(d) = entre 59 et 70 jours.

L' activateur biologique pour fosse septique a deux effets : Diminuer le temps de latence et augmenter la vitesse de la réaction. La zéolite par elle-même a un temps de latence plus mauvais que la kaolinite seule. Et, en conséquence, la zéolite par elle-même est un mauvais activateur. Cependant la vitesse de la réaction est améliorée en combinant la zéolite à la kaolinite. Alors que la zéolite lorsqu'elle est dans la composition considérée dans la proportion de l'ordre de 10 %, ne change pas substantiellement le temps de latence (par rapport à la kaolinite seule), elle diminue substantiellement la durée de la réaction.

| | Production de Méthane Ml/.jour | COD Mg $O_2$/ l.jour |
|---|---|---|
| (a) | 18,2 | – 52,6 |
| (b) | 30,6 | – 95,2 |
| (c) | 0 | – 10,30 |
| (d) | 0 | – 10,60 |

Les résultats précédents démontrent que la combinaison considérée zéolite + kaolinite donne des résultats qui sont de l'ordre de deux fois meilleur que la kaolinite seule, ce qui est suprenant si on considère les résulats très médiocres de la zéolite seule.

On a mesuré ensuite le volume de cellulose. Pour ce second test on a utilisé comme subtrat de la cellulose pure (papier filtre) dans la proportion de 4g/l. Durant l'essai et à cause de la digestion anaérobie le papier est décomposé et donne une masse de volume important, de la même manière que dans une fosse septique. Puis le papier est rendu soluble et donne des acides gras volatils qui sont ensuite méthanisés. le paramètre pertinent est le volume de cellulose avant solubilisation parce que dans la fosse septique les fibres de cellulose provenant du papier déterminent le volume des boues. Ces volumes (en ml/l) ont été mesurés après respectivement 40 et 60 jours :

5

|     | 40 jours | 60 jours |
|-----|----------|----------|
| (a) | 194      | 175      |
| (b) | 139      | 104      |
| (d) | 320      | 304      |

Il est clair en ce qui précède que la combinaison de zéolite et de kaolinite permet une réduction du volume de boues de l'ordre de 30 à 40 % par rapport à la kaolinite seule.

**Revendications**

1. Activateur biologique pour fosse septique caractérisé par le fait qu'il comprend un mélange de :
   (a) de l'ordre de 87,5 % en poide de particules de kaolinite ayant :
   (i) une surface spécifique comprise entre environ 29 m²/g et 35 m²/g ;
   (ii) une capacité d'échange cationique comprise entre environ 12 meq/100 g et 16 meq/100g ;
   (iii) au moins 91 % de particules de taille inférieure à environ 16 microns ;
   (iv) une densité à l'eau comprise entre environ 2,4 et 3 ;
   (v) un potentiel redox négatif compris entre environ - 350 mV et 600 mV ;
        et comprenant :
   (vi) de l'ordre de 2 % de $Fe_2 O_3$ ;
   (vii) de l'ordre de 2000 mg/k de cuivre ;
   (viii) de l'ordre de 4 500 mg/kg de zinc ;
   et
   (b) de l'ordre de 12,5 % en poids essentiellement des particules microporeuses d'au moins une zéolite.

2. Activateur biologique pour fosse septique caractérisé par le fait qu'il comprend un mélange de :
   (a) de l'ordre de 87,5 % en poids de particules de kaolinite ;
        et
   (b) de l'ordre de 12,5 % en poids essentiellement de particules microporeuses d'au moins une zéolite ayant :
   (i) une surface spécifique d'environ 250 m²/g ;
   (ii) une capacité d'échange cationique d'environ 170 meq/100 g ;
   (iii) au moins 95 % de particules ayant une taille inférieure à environ 180 microns ;
   (iv) une densité dans l'eau d'environ 2,2 ;
   (v) un pH d'environ 8,87 ;
   (vi) un potentiel redox positif ;
        et comprenant
   (vii) environ 46,5 % de $SiO_2$ ;
   (viii) environ 15 % de $Al_2 O3$ ;
   (ix) environ 10 % de CaO.

3. Activateur biologique pour fosse septique caractérisé par le fait qu'il comprend un mélange de :
   (a) de l'ordre de 80 % à 95 % en poids de particules de kaolinite, ayant :
   (i) une surface spécifique comprise entre environ 29 m²/g et 35 m²/g :
   (ii) une capacité d'échange cationique comprise entre environ 12 meq/100g et 16 meq/100g ;
   (iii) au moins 91 % des particules de taille inférieure à environ 16 microns ;
   (iv) une densité à l'eau comprise entre environ 2,4 et 3 ;
   (v) un potentiel redox négatif compris entre environ - 350 mV et - 600 mV.
        et
   (b) de l'ordre de 5 % à 20 % en poids essentiellement de particules microporeuses d'au moins une zéolite ayant :
   (i) une surface spécifique d'environ 250 m2/g ;

(ii) une capacité d'échange cationique d'environ 170 meq/100g :

(iii) au moins 95 % de particules ayant une taille inférieure à environ 180 microns ;

(iv) une densité dans l'eau d'environ 2,2 ;

(v) un pH d'environ 8,87 ;

(vi) un potentiel redox positif ;

4. Activateur biologique pour fosse septique selon l'une des revendications 1, 2, 3 caractérisé par le fait que sa capacité d'échange cationique est comprise entre 14 meq/100g et 38 meq/100g.

5. Activateur biologique pour fosse septique selon l'une des revendications 1, 2, 3 caractérisé par le fait que sa surface spécifique est comprise entre 35 $m^2/g$ et 66 $m^2/g$.

6. Activateur biologique pour fosse septique selon l'une des revendications 1, 2, 3 caractérisé par le fait que sa densité dans l'eau est comprise entre 2,25 et 2,75.

7. Activateur biologique pour fosse septique selon l'une des revendications 1, 2, 3 caractérisé par le fait que encombrement est compris entre 1,5 l/kg et 2,6 l/kg.

8. Activateur biologique pour fosse septique selon l'une des revendications 1, 2, 3 caractérisé par le fait qu'au moins 80 % de ses particules a une granulométrie inférieure à 16 microns.

9. Activateur biologique pour fosse septique selon l'une des revendications 1, 2, 3 caractérisé par le fait qu'il présente un taux de matières volatiles compris entre 6,5 % et 9,5 %.

10. Activateur biologique pour fosse septique selon l'une des revendications 1, 2, 3 caractérisé par le fait qu'il comprend de 43 % à 94 % en poids de silice en $SiO_2$.

11. Activateur biologique pour fosse septique selon l'une des revendications 1, 2, 3 caractérisé par le fait qu'il comprend de 3 % à 30 % en poids d'aluminium en $Al_2 O_3$.

12. Activateur biologique pour fosse septique selon l'une des revendications 1, 2, 3 caractérisé par le fait qu'il comprend de 1,8 % à 7,7 % en poids de fer en $Fe_2 O_3$.

13. Activateur biologique pour fosse septique selon l'une des revendications 1, 2, 3 caractérisé par le fait qu'il comprend de 1,3 % à 5,9 % en poids de calcium en CaO.

14. Activateur biologique pour fosse septique caractérisé par le fait qu'il comprend un mélange de

(a) de l'ordre de 87,5 % en poids de particules de kaolinite, ayant :

(i) une surface spécifique comprise entre environ 29 $m^2/g$ et 35 $m^2/g$ ;

(ii) Une capacité d'échange cationique comprise entre environ 12 meq/100g et 15 meq/100g ;

(iii) au moins 91 % de particules de taille inférieure à environ 16 microns ;

(iv) une densité à l'eau comprise entre environ 2,4 et 3 :

(v) un potentiel redox négatif compris entre environ - 350 mV et - 600 mV ;
et

(b) de l'ordre de 12,5 % en poids essentiellement des particules microporeuses d'au moins une zéolite ayant :

(i) une surface spécifique d'environ 250 $m^2/g$ ;

(ii) une capacité d'échange cationique d'environ 170 meq/100g ;

(iii) au moins 95 % de particules ayant une taille inférieure à environ 180 microns ;

(iv) une densité dans l'eau d'environ 7,2 ;

(v) un pH d'environ 8,87 ;

(vi) un potentiel redox positif ;

15. Activateur biologique selon la revendication 14, caractérisé par le fait que sa capacité d'échange cationique est d'environ 33,5 meq/100g.

16. Activateur biologique selon la revendication 14, caractérisé par le fait que sa surface spécifique est d'environ 59,3 $m^2/g$.

17. Activateur biologique selon la revendication 14, caractérisé par le fait que sa densité dans l'eau est d'environ 2,6.

**18.** Activateur biologique selon la revendication 14, caractérisé par le fait qu'au moins 61 % de ses particules ont une granulométrie inférieure à 4 microns.

**19.** Activateur biologique selon la revendication 14, caractérisé par le fait que son taux de matières volatiles est compris entre environ 7,2 % et 9,2 %.

**20.** Activateur biologique selon la revendication 14, caractérisé par le fait que son taux en matière volatile est d'environ 8,7 %.

**21.** Activateur biologique selon la revendication 14, caractérisé par le fait que son pH est d'environ 7,85.

**22.** Activateur biologique selon la revendication 14, caractérisé par le fait que son potentiel redox est d'environ ou inférieur à - 350 mV.

**23.** Activateur biologique selon la revendication 14, caractérisé par le fait qu'il comprend environ 57 % en poids de silice en $SiO_2$.

**24.** Activateur biologique selon la revendication 14, caractérisé par le fait qu'il comprend environ 22,7 % en poids d'aluminium en $Al_2 O_3$.

**25.** Activateur biologique selon la revendication 14, caractérisé par le fait qu'il comprend environ 2,1 % en poids de fer en $Fe_2 O_3$.

**26.** Activateur biologique selon la revendication 14, caractérisé par le fait qu'il comprend environ 1,5 % en poids de calcium en $C_aO$.

**27.** Activateur biologique selon la revendication 14, caractérisé par le fait qu'il comprend environ 0,4 % en poids de magnésium en $M_gO$.

**28.** Activateur biologique selon la revendication 14, caractérisé par le fait qu'il comprend environ 0,22 % en poids de sodium en $Na_2 O$.

**29.** Activateur biologique selon la revendication 14, caractérisé par le fait qu'il comprend environ 4,9 % en poids de titane en $Ti O_2$.

**30.** Activateur biologique selon la revendication 14, caractérisé par le fait qu'il comprend environ 0,8 % en poids de potassium en $K_2O$.

**31.** Activateur biologique selon la revendication 14, caractérisé par le fait qu'il comprend environ 0,1 % en poids de phosphore en $P_2O_5$.

**32.** Activateur biologique selon la revendication 14, caractérisé par le fait qu'il comprend environ 0,45 % en poids de zinc.

**33.** Activateur biologique selon la revendication 14, caractérisé par le fait qu'il comprend environ 0,2 % en poids de cuivre.

**34.** Activateur biologique selon l'une quelconque des revendications 4 et 14 caractérisé par le fait qu'il comporte à l'état de trace un ou plusieurs de : manganèse, cobalt, 0,45 % de zinc, 0,2 % de cuivre, béryllium.

**35.** Activateur biologique pour fosse septique selon l'une quelconque des revendications 1, 2, 3, 14 caractérisé par le fait que la zéolite est une zéolite naturelle.

**36.** Activateur biologique pour fosse septique selon l'une quelconque des revendications 1, 2, 3, 14 caractérisé par le fait qu'il comprend un mélange de deux zéolites naturelles : chabazite et phillipsite.

**37.** Activateur biologique pour fosse septique selon l'une quelconque des revendications 1, 2, 3, 14 caractérisé par le fait qu'il comprend un mélange de deux zéolites naturelles sensiblement en quantité sensiblement égales.

## Claims

1. Biological activator for septic tanks, characterised in that it comprises a mixture of:

   (a) of the order of 87.5% by weight of kaolinite particles having:

   (i) a specific surface area of between approximately 29 $m^2$/g and 35 $m^2$/g;

   (ii) a cation exchange capacity of between approximately 12 meq/100 g and 16 meq/100 g;

   (iii) at least 91% of particles less than approximately 16 microns in size;

   (iv) a density in water of between approximately 2.4 and 3;

   (v) a negative redox potential of between approximately -350 mV and -600 mV;

      and comprising:

   (vi) of the order of 2% of $Fe_2O_3$;

   (vii) of the order of 2000 mg/kg of copper;

   (viii) of the order of 4500 mg/kg of zinc;

      and

   (b) of the order of 12.5% by weight essentially of microporous particles of at least one zeolite.

2. Biological activator for septic tanks, characterised in that it comprises a mixture of:

   (a) of the order of 87.5% by weight of kaolinite particles;

      and

   (b) of the order of 12.5% by weight essentially of microporous particles of at least one zeolite having:

   (i) a specific surface area of approximately 250 $m^2$/g;

   (ii) a cation exchange capacity of approximately 170 meq/100 g;

   (iii) at least 95% of particles less than approximately 180 microns in size;

   (iv) a density in water of approximately 2.2;

   (v) a pH of approximately 8.87;

   (vi) a positive redox potential;

      and comprising

   (vii) approximately 46.5% of $SiO_2$;

   (viii) approximately 15% of $Al_2O_3$;

   (ix) approximately 10% of CaO.

3. Biological activator for septic tanks, characterised in that it comprises a mixture of:

   (a) of the order of 80% to 95% by weight of kaolinite particles having:

   (i) a specific surface area of between approximately 29 $m^2$/g and 35 $m^2$/g;

   (ii) a cation exchange capacity of between approximately 12 meq/100 g and 16 meq/100 g;

   (iii) at least 91% of particles less than approximately 16 microns in size;

   (iv) a density in water of between approximately 2.4 and 3;

   (v) a negative redox potential of between approximately -350 mV and -600 mV;

      and

   (b) of the order of 5% to 20% by weight essentially of microporous particles of at least one zeolite having:

   (i) a specific surface area of approximately 250 $m^2$/g;

   (ii) a cation exchange capacity of approximately 170 meq/100 g;

   (iii) at least 95% of particles less than approximately 180 microns in size;

   (iv) a density in water of approximately 2.2;

   (v) a pH of approximately 8.87;

   (vi) a positive redox potential.

4. Biological activator for septic tanks according to one of Claims 1, 2 and 3, characterised in that its cation exchange capacity is between 14 meq/100 g and 38 meq/100 g.

5. Biological activator for septic tanks according to one of Claims 1, 2 and 3, characterised in that its specific surface area is between 35 $m^2$/g and 66 $m^2$/g.

6. Biological activator for septic tanks according to one of Claims 1, 2 and 3, characterised in that its density in water is between 2.25 and 2.75.

7. Biological activator for septic tanks according to one of Claims 1, 2 and 3, characterised in that its specific volume is between 1.5 l/kg and 2.6 l/kg.

8. Biological activator for septic tanks according to one of Claims 1, 2 and 3, characterised in that at least 80% of its particles have a particle size of less than 16 microns.

9. Biological activator for septic tanks according to one of Claims 1, 2 and 3, characterised in that it possesses a volatile matter content of between 6.5% and 9.5%.

10. Biological activator for septic tanks according to one of Claims 1, 2 and 3, characterised in that it comprises from 43% to 94% by weight of silica as $SiO_2$.

11. Biological activator for septic tanks according to one of Claims 1, 2 and 3, characterised in that it comprises from 3% to 30% by weight of aluminium as $Al_2O_3$.

12. Biological activator for septic tanks according to one of Claims 1, 2 and 3, characterised in that it comprises from 1.8% to 7.7% by weight of iron as $Fe_2O_3$.

13. Biological activator for septic tanks according to one of Claims 1, 2 and 3, characterised in that it comprises from 1.3% to 5.9% by weight of calcium as CaO.

14. Biological activator for septic tanks, characterised in that it comprises a mixture of
　　(a) of the order of 87.5% by weight of kaolinite particles having:
　　　(i) a specific surface area of between approximately 29 $m^2/g$ and 35 $m^2/g$;
　　　(ii) a cation exchange capacity of between approximately 12 meq/100 g and 15 meq/100 g;
　　　(iii) at least 91% of particles less than approximately 16 microns in size;
　　　(iv) a density in water of between approximately 2.4 and 3;
　　　(v) a negative redox potential of between approximately -350 mV and -600 mV;
　　　　and
　　(b) of the order of 12.5% by weight essentially of microporous particles of at least one zeolite having:
　　　(i) a specific surface area of approximately 250 $m^2/g$;
　　　(ii) a cation exchange capacity of approximately 170 meq/100 g;
　　　(iii) at least 95% of particles less than approximately 180 microns in size;
　　　(iv) a density in water of approximately 7.2;
　　　(v) a pH of approximately 8.87;
　　　(vi) a positive redox potential.

15. Biological activator according to Claim 14, characterised in that its cation exchange capacity is approximately 33.5 meq/100 g.

16. Biological activator according to Claim 14, characterised in that its specific surface area is approximately 59.3 $m^2/g$.

17. Biological activator according to Claim 14, characterised in that its density in water is approximately 2.6.

18. Biological activator according to Claim 14, characterised in that at least 61% of its particles have a particle size of less than 4 microns.

19. Biological activator according to Claim 14, characterised in that its volatile matter content is between approximately 7.2% and 9.2%.

20. Biological activator according to Claim 14, characterised in that its volatile matter content is approximately 8.7%.

21. Biological activator according to Claim 14, characterised in that its pH is approximately 7.85.

22. Biological activator according to Claim 14, characterised in that its redox potential is approximately or is less than -350 mV.

23. Biological activator according to Claim 14, characterised in that it comprises approximately 57% by weight of silica as $SiO_2$.

24. Biological activator according to Claim 14, characterised in that it comprises approximately 22.7% by weight of aluminium as $Al_2O_3$.

25. Biological activator according to Claim 14, characterised in that it comprises approximately 2.1% by weight of iron as $Fe_2O_3$.

26. Biological activator according to Claim 14, characterised in that it comprises approximately 1.5% by weight of calcium as CaO.

27. Biological activator according to Claim 14, characterised in that it comprises approximately 0.4% by weight of magnesium as MgO.

28. Biological activator according to Claim 14, characterised in that it comprises approximately 0.22% by weight of sodium as $Na_2O$.

29. Biological activator according to Claim 14, characterised in that it comprises approximately 4.9% by weight of titanium as $TiO_2$.

30. Biological activator according to Claim 14, characterised in that it comprises approximately 0.8% by weight of potassium as $K_2O$.

31. Biological activator according to Claim 14, characterised in that it comprises approximately 0.1% by weight of phosphorus as $P_2O_5$.

32. Biological activator according to Claim 14, characterised in that it comprises approximately 0.45% by weight of zinc.

33. Biological activator according to Claim 14, characterised in that it comprises approximately 0.2% by weight of copper.

34. Biological activator according to either of Claims 4 and 14, characterised in that it contains in the trace state one or more of: manganese, cobalt, 0.45% of zinc, 0.2% of copper, beryllium.

35. Biological activator for septic tanks according to any one of Claims 1, 2, 3 and 14, characterised in that the zeolite is a natural zeolite.

36. Biological activator for septic tanks according to any one of Claims 1, 2, 3 and 14, characterised in that it comprises a mixture of two natural zeolites: chabazite and phillipsite.

37. Biological activator for septic tanks according to any one of Claims 1, 2, 3 and 14, characterised in that it comprises a mixture of two natural zeolites in substantially equal amounts.

**Patentansprüche**

1. Aktivierende Zusammensetzung für Faulgruben, dadurch gekennzeichnet, daß sie eine Mischung aus folgenden Bestandteilen ist:
   (a) ca. 87,5 Gewichtprozent Kaolinitpartikel mit
   (i) einer Oberflächenkennzahl zwischen 29 m²/g und 35 m²/g,
   (ii) einer Kationenaustauschkapazität zwischen 12 meq/100 g und 16 meq/100 g,
   (iii) mindestens 91 % Partikeln, deren Korngröße kleiner als 16 Mikrometer ist,
   (iv) einer Dichte in Wasser zwischen ca. 2,4 und 3,
   (v) einem negativen Redoxpotential zwischen ca. -350 mV und 600 mV,
   sowie
   (vi) ca. 2 % $Fe_2O_3$,
   (vii) ca. 2000 mg/kg Kupfer,
   (viii) ca 4500 mg/kg Zink
   und
   (b) ca. 1,5 Gewichtprozent hauptsächlich mikroporöser Partikel von mindestens einem Zeolith.

2. Aktivierende Zusammensetzung für Faulgruben, dadurch gekennzeichnet, daß sie eine Mischung aus folgenden Bestandteilen ist:
   (a) ca. 87,5 Gewichtprozent Kaolinitpartikel
   und
   (b) ca. 12,5 Gewichtprozent hauptsächlich mikroporöser Partikel von mindestens einem Zeolith mit
      (i) einer Oberflächenkennzahl von ca. 250 m²/g,
      (ii) einer Kationenaustauschkapazität von ca. 170 meq/100 g,
      (iii) mindestens 95 % Partikeln, deren Korngröße kleiner als 180 Mikrometer ist,
      (iv) einer Dichte in Wasser zwischen ca. 2,2,
      (v) einem pH-Wert von ca. 8,87,
      (vi) einem positiven Redoxpotential,
      sowie
      (vii) ca. 46 % $SiO_2$,
      (viii) ca. 15 % $Al_2O_3$,
      (ix) ca. 10 % CaO.

3. Aktivierende Zusammensetzung für Faulgruben, dadurch gekennzeichnet, daß sie eine Mischung aus folgenden Bestandteilen ist:
   (a) ca. 80 bis 95 Gewichtprozent Kaolinitpartikel mit
      (i) einer Oberflächenkennzahl zwischen 29 m²/g und 35 m²/g,
      (ii) einer Kationenaustauschkapazität zwischen 12 meq/100 g und 16 meq/100 g,
      (iii) mindestens 91 % Partikeln, deren Korngröße kleiner als 16 Mikrometer ist,
      (iv) einer Dichte in Wasser zwischen ca. 2,4 und 3,
      (v) einem negativen Redoxpotential zwischen ca. -350 mV und 600 mV,
      und
   (b) ca. 5 bis 20 Gewichtprozent hauptsächlich mikroporöser Partikel von mindestens einem Zeolith mit
      (i) einer Oberflächenkennzahl von ca. 250 m²/g,
      (ii) einer Kationenaustauschkapazität von ca. 170 meq/100 g,
      (iii) mindestens 95 % Partikeln, deren Korngröße kleiner als 180 Mikrometer ist,
      (iv) einer Dichte in Wasser zwischen ca. 2,2,
      (v) einem pH-Wert von ca. 8,87,
      (vi) einem positiven Redoxpotential.

4. Aktivierende Zusammensetzung für Faulgruben nach einem der Patentansprüche 1, 2 oder 3, dadurch gekennzeichnet, daß ihre Kationenaustauschkapazität zwischen 14 meq/100 g und 38 meq/100 g liegt.

5. Aktivierende Zusammensetzung für Faulgruben nach einem der Patentansprüche 1, 2 oder 3, dadurch gekennzeichnet, daß ihre Oberflächenkennzahl zwischen 35 m²/g und 66 m²/g liegt.

6. Aktivierende Zusammensetzung für Faulgruben nach einem der Patentansprüche 1, 2 oder 3, dadurch gekennzeichnet, daß ihre Dichte in Wasser zwischen 2,25 und 2,75 liegt.

7. Aktivierende Zusammensetzung für Faulgruben nach einem der Patentansprüche 1, 2 oder 3, dadurch gekennzeichnet, daß der Raumfaktor zwischen 1,5 l/kg und 2,6 l/kg liegt.

8. Aktivierende Zusammensetzung für Faulgruben nach einem der Patentansprüche 1, 2 oder 3, dadurch gekennzeichnet, daß bei mindestens 80 % der Partikel die Korngröße kleiner als 16 Mikrometer ist.

9. Aktivierende Zusammensetzung für Faulgruben nach einem der Patentansprüche 1, 2 oder 3, dadurch gekennzeichnet, daß sie einen Anteil flüchtiger Stoffe zwischen 6,5 % und 9,5 % besitzt.

10. Aktivierende Zusammensetzung für Faulgruben nach einem der Patentansprüche 1, 2 oder 3, dadurch gekennzeichnet, daß sie zwischen 43 und 94 Gewichtsprozent Silizium in Form von $SiO_2$ besitzt.

11. Aktivierende Zusammensetzung für Faulgruben nach einem der Patentansprüche 1, 2 oder 3, dadurch gekennzeichnet, daß sie zwischen 3 und 30 Gewichtsprozent Aluminium in Form von $Al_2O_3$ besitzt.

12. Aktivierende Zusammensetzung für Faulgruben nach einem der Patentansprüche 1, 2 oder 3, dadurch gekennzeichnet, daß sie zwischen 1,8 und 7,7 Gewichtsprozent Eisen in Form von $Fe_2O_3$ besitzt.

13. Aktivierende Zusammensetzung für Faulgruben nach einem der Patentansprüche 1, 2 oder 3, dadurch gekennzeichnet, daß sie zwischen 1,3 und 5,9 Gewichtsprozent Calcium in Form von CaO besitzt.

14. Aktivierende Zusammensetzung für Faulgruben, dadurch gekennzeichnet, daß sie eine Mischung aus folgenden Bestandteilen ist:

    (a) ca. 87,5 Gewichtprozent Kaolinitpartikel mit

        (i) einer Oberflächenkennzahl zwischen 29 $m^2$/g und 35 $m^2$/g,

        (ii) einer Kationenaustauschkapazität zwischen 12 meq/100 g und 15 meq/100 g,

        (iii) mindestens 91 % Partikeln, deren Korngröße kleiner als 16 Mikrometer ist,

        (iv) einer Dichte in Wasser zwischen ca. 2,4 und 3,

        (v) einem negativen Redoxpotential zwischen ca. -350 mV und 600 mV,

    und

    (b) ca. 12,5 Gewichtprozent hauptsächlich mikroporöser Partikel von mindestens einem Zeolith mit

        (i) einer Oberflächenkennzahl von ca. 250 $m^2$/g,

        (ii) einer Kationenaustauschkapazität von ca. 170 meq/100 g,

        (iii) mindestens 95 % Partikeln, deren Korngröße kleiner als ca. 180 Mikrometer ist,

        (iv) einer Dichte in Wasser zwischen ca. 7,2,

        (v) einem pH-Wert von ca. 8,87,

        (vi) einem positiven Redoxpotential.

15. Aktivierende Zusammensetzung für Faulgruben nach Patentanspruch 14, dadurch gekennzeichnet, daß ihre Kationenaustauschkapazität ca. 33,5 meq/100 g beträgt.

16. Aktivierende Zusammensetzung für Faulgruben nach Patentanspruch 14, dadurch gekennzeichnet, daß ihre Oberflächenkennzahl ca. 59,3 $m^2$/g beträgt.

17. Aktivierende Zusammensetzung für Faulgruben nach Patentanspruch 14, dadurch gekennzeichnet, daß ihre Dichte in Wasser ca. 2,6 beträgt.

18. Aktivierende Zusammensetzung für Faulgruben nach Patentanspruch 14, dadurch gekennzeichnet, daß bei mindestens 61% der Partikel die Korngröße kleiner als 4 Mikrometer ist.

19. Aktivierende Zusammensetzung für Faulgruben nach Patentanspruch 14, dadurch gekennzeichnet, daß sie einen Anteil flüchtiger Stoffe zwischen 7,2 % und 9,2 % besitzt.

20. Aktivierende Zusammensetzung für Faulgruben nach Patentanspruch 14, dadurch gekennzeichnet, daß sie einen Anteil flüchtiger Stoffe von ca. 8,7 % besitzt.

21. Aktivierende Zusammensetzung für Faulgruben nach Patentanspruch 14, dadurch gekennzeichnet, daß sie einen pH-Wert von ca. 7,85 besitzt.

22. Aktivierende Zusammensetzung für Faulgruben nach Patentanspruch 14, dadurch gekennzeichnet, daß ihr Redoxpotential ca. -350 mV oder darunter liegt.

23. Aktivierende Zusammensetzung für Faulgruben nach Patentanspruch 14, dadurch gekennzeichnet, daß sie ca. 57 Gewichtsprozent Silizium in Form von $SiO_2$ besitzt.

24. Aktivierende Zusammensetzung für Faulgruben nach Patentanspruch 14, dadurch gekennzeichnet, daß sie ca. 22,7 Gewichtsprozent Aluminium in Form von $Al_2O_3$ besitzt.

25. Aktivierende Zusammensetzung für Faulgruben nach Patentanspruch 14, dadurch gekennzeichnet, daß sie ca. 2,1 Gewichtsprozent Eisen in Form von $Fe_2O_3$ besitzt.

26. Aktivierende Zusammensetzung für Faulgruben nach Patentanspruch 14, dadurch gekennzeichnet, daß sie ca. 1,5 Gewichtsprozent Calcium in Form von CaO besitzt.

27. Aktivierende Zusammensetzung für Faulgruben nach Patentanspruch 14, dadurch gekennzeichnet, daß sie ca. 0,4 Gewichtsprozent Magnesium in Form von MgO besitzt.

28. Aktivierende Zusammensetzung für Faulgruben nach Patentanspruch 14, dadurch gekennzeichnet, daß sie ca. 0,22 Gewichtsprozent Natrium in Form von $Na_2O$ besitzt.

29. Aktivierende Zusammensetzung für Faulgruben nach Patentanspruch 14, dadurch gekennzeichnet, daß sie ca. 4,9 Gewichtsprozent Titan in Form von $Ti_2O$ besitzt.

30. Aktivierende Zusammensetzung für Faulgruben nach Patentanspruch 14, dadurch gekennzeichnet, daß sie ca. 0,8 Gewichtsprozent Kalium in Form von $K_2O$ besitzt.

31. Aktivierende Zusammensetzung für Faulgruben nach Patentanspruch 14, dadurch gekennzeichnet, daß sie ca. 0,1 Gewichtsprozent Phosphor in Form von $P_2O_5$ besitzt.

32. Aktivierende Zusammensetzung für Faulgruben nach Patentanspruch 14, dadurch gekennzeichnet, daß sie ca. 0,45 Gewichtsprozent Zink besitzt.

33. Aktivierende Zusammensetzung für Faulgruben nach Patentanspruch 14, dadurch gekennzeichnet, daß sie ca. 0,2 Gewichtsprozent Kupfer besitzt.

34. Aktivierende Zusammensetzung für Faulgruben nach einem der Patentansprüche 4 oder 14, dadurch gekennzeichnet, daß sie Spuren eines oder mehrerer der folgenden Elemente besitzt: Mangan, Kobalt, 0,45 % Zink, 0,2 % Kupfer, Beryllium.

35. Aktivierende Zusammensetzung für Faulgruben nach einem der Patentansprüche 1, 2, 3 oder 14, dadurch gekennzeichnet, daß der Zeolith ein natürlicher Zeolith ist.

36. Aktivierende Zusammensetzung für Faulgruben nach einem der Patentansprüche 1, 2, 3 oder 14, dadurch gekennzeichnet, daß sie aus einer Mischung aus den zwei natürlichen Zeolithen Chabazit und Phillipsit besteht.

37. Aktivierende Zusammensetzung für Faulgruben nach einem der Patentansprüche 1, 2, 3 oder 14, dadurch gekennzeichnet, daß sie aus einer Mischung aus zwei natürlichen Zeolithen besteht, denen Mengenanteile weitgehend gleich sind.